Europäisches Patentamt

European Patent Office

Office européen des brevets

(11) Publication number: **0 295 520 B1**

(12) **EUROPEAN PATENT SPECIFICATION**

(45) Date of publication of patent specification: **26.08.92**

(51) Int. Cl.⁵: **F02B 23/06**, F02F 3/26

(21) Application number: **88108986.6**

(22) Date of filing: **06.06.88**

(54) **Combustion chamber in a direct injection type diesel engine.**

(30) Priority: **08.06.87 JP 141450/87**
**02.12.87 JP 182937/87 U**
**27.01.88 JP 14613/88**
**29.01.88 JP 17264/88**
**15.02.88 JP 17444/88 U**
**05.04.88 JP 45288/88 U**

(43) Date of publication of application:
**21.12.88 Bulletin 88/51**

(45) Publication of the grant of the patent:
**26.08.92 Bulletin 92/35**

(84) Designated Contracting States:
**AT DE FR GB**

(56) References cited:
**EP-A- 0 105 933**      **EP-A- 0 172 253**
**EP-A- 0 269 093**      **DE-A- 327 998**
**DE-A- 2 739 419**      **GB-A- 2 066 896**
**GB-A- 2 097 472**      **JP-U- 5 956 324**
**JP-U-60 190 935**

**PATENT ABSTRACTS OF JAPAN vol. 5, no. 187 (M-98) (859), 26 November 1981, & JP-A-56 106 024**

(73) Proprietor: **TOYOTA JIDOSHA KABUSHIKI KAISHA**
**1, Toyota-cho Toyota-shi**
**Aichi-ken 471(JP)**

(72) Inventor: **Sakata, Ichiro Toyota Jidosha Kabushiki Kaisha**
**1, Toyota-cho**
**Toyota-shi Aichi-ken(JP)**
Inventor: **Ishisaka, Kazuyoshi Toyota Jidosha Kabushiki K.**
**1, Toyota-cho**
**Toyota-shi Aichi-ken(JP)**
Inventor: **Ueda, Takanori Toyota Jidosha Kabushiki Kaisha**
**1, Toyota-cho**
**Toyota-shi Aichi-ken(JP)**

(74) Representative: **Grams, Klaus Dieter, Dipl.-Ing. et al**
**Patentanwaltsbüro Tiedtke-Bühling-Kinne-Grupe-Pellmann-Grams-Struif Winter-Roth**
**Bavariaring 4**
**W-8000 München 2(DE)**

## Description

The present invention relates to a combustion chamber according to the preamble of claim 1.

It is well known in a direct injection type diesel engine to form a combustion chamber by providing a cavity at the top of a piston. For example, Japanese Unexamined Utility Model Publication (Kokai) No. 59-56324 discloses a direct injection type diesel engine having a cavity at the top of a piston, in which the cavity is formed by a horizontally inwardly projecting circumferential lip at the top area of the cavity and a vertically inner circumferential conical wall spreading downwardly from the lip. The fuel is injected toward the inner circumferential conical wall so that a part of fuel is delivered to the inner peripheral region of the cavity along the inner circumferential conical wall, and another part of the fuel is reflected at the inner circumferential conical wall toward the central region of the cavity. It is therefore possible, in this direct injection type diesel engine, to disperse the injected fuel at the inner peripheral region and the central region of the cavity, and thus increase an excess air factor.

In this direct injection type diesel engine, however, a problem occurs in that it can not be exactly determined exactly where combustion starts in the cavity, and the pressure in the combustion chamber may suddenly rise if combustion starts simultaneously at optional positions, causing intense noise. The abrupt rise of the pressure accompanies an undesirable increase in the temperature in the combustion chamber, resulting in an increased pollution by NOx components in the exhaust gas. Although the excess air factor is increased by the fuel dispersed at the inner peripheral region and the central region of the cavity, there is an interstice between the inner peripheral region and the central region where the fuel is not supplied, and thus air prevailing thereat is not satisfactorily used, resulting in a still larger amount of unburned HC and CO.

Japanese Unexamined Utility Model Publication (Kokai) No. 60-190935 discloses a combustion chamber arrangement in a direct injection type diesel engine, in which a cavity at the top of a piston includes an inner circumferential conical wall, a part of which is formed in a concave shape. Therefore, three successive stages of target surface to which the fuel is directed are formed; the fuel is first applied to the first stage, i.e., the upper conical wall portion above the concave portion, then to the second stage, i.e., the concave portion, and finally, to the third stage, i.e., the lower conical wall portion below the concave portion. The concave portion is intended to reflect the injected fuel toward the central region of the cavity, and the upper and the lower conical wall portions guide the injected fuel toward the inner peripheral region of the cavity. This prior art uses the concave portion principally to shift the reflected fuel toward the central region of the cavity, and aims at discontinuously dispersing the fuel at the inner peripheral region and the central region of the cavity. A combustion chamber arrangement having about the same effect is disclosed in the EP-A-0 172 253.

Japanese Unexamined Patent Publication (Kokai) Nos. 52-40209 and 59-211716 also disclose a combustion chamber arrangement in a direct injection type diesel engine, in which a cavity at the top of a piston includes a bottom wall having a part thereof formed in a concave shape, and the fuel is directed to the concave bottom wall to be reflected.

An object of the present invention is to further develop a combustion chamber according to the preamble of claim 1 in such a way that an incomplete combustion is avoided.

This object can be achieved by the features of claim 1. Preferred features of the invention are set out in the subclaims.

Preferably, the concave fuel reflecting surface is defined between an upper circumferential ridge and a lower circumferential ridge, and the disposition and shape of the concave fuel reflecting surface relative to the fuel injection means is such that the lower circumferential ridge allows the fuel reflected at an upper region of the concave fuel reflecting surface just below the upper circumferential ridge to pass by to the peripheral region of the cavity. Accordingly, it is possible to direct the fuel reflected at the upper region of the concave fuel reflecting surface to the peripheral region of the cavity, and then continuously shift the course of the fuel by reflecting the fuel at the upwardly moving concave fuel reflecting surface.

The present invention will become more apparent from the following description of the preferred embodiment with reference to the accompanying drawings, in which:

Fig. 1 is a sectional view of the first embodiment of a direct injection type diesel engine according to the present invention;

Fig. 2 is a partial enlarged view of the engine in Fig. 1;

Figs. 3a to 3e are views illustrating the combustion steps according to the present invention;

Fig. 4 is a view of a modification of the engine in Fig. 1;

Figs. 5a to 5c are views of the second embodiment of the engine according to the present invention;

Figs. 6a and 6b show examples of the fuel injection mode used in the embodiment in Figs. 5a to 5c, respectively;

Fig. 7 shows another example of the fuel injection mode used in the embodiment in Figs. 8a to 8c;

Figs. 8a to 8c are views of the third embodiment of the engine according to the present invention;

Figs. 9a and 9b are views of the fourth embodiment of the engine according to the present invention;

Figs. 10a to 10c are views of the fifth embodiment of the engine according to the present invention; and

Figs. 11a to 11c are views of the sixth embodiment of the engine according to the present invention;

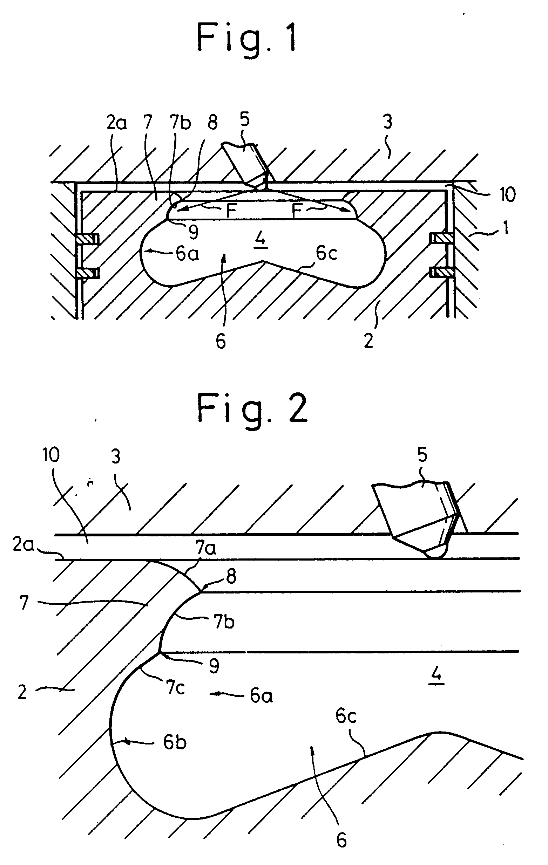

Figures 1 and 2 show a direct injection type diesel engine according to the present invention. In Figs. 1 and 2, reference numeral 1 represents a cylinder block, 2 represents a piston reciprocally inserted in the cylinder block 1, 3 represents a cylinder head bolted on the cylinder block 1, 4 represents a combustion chamber formed between the inner generally flat surface of the cylinder head 3 and the top of the piston 2, and 5 represents a fuel injection nozzle arranged at the top center in the combustion chamber 4, respectively. Although not shown in the drawings, intake and exhaust ports are formed in the cylinder head 3, and intake and exhaust valves are arranged in the intake and exhaust ports at the opening points into the combustion chamber 4, respectively. A helically shaped port is used for the intake port for giving a swirl to the intake air flowing into the combustion chamber 4. Alternatively, for giving a swirl to the intake air, an intake valve with a partial shroud can be used, or it is also possible to connect as intake port tangentially to the combustion chamber 4 at the peripheral portion thereof. In the embodiment shown in Figs. 1 and 2, the fuel injection nozzle 5 is arranged obliquely to avoid interference with the intake and exhaust ports and valves.

As shown in Figs. 1 and 2, the piston 2 has a flat top 2a with a cavity 6 formed therein. The cavity 6 is formed by an inner circumferential wall 6a and a bottom wall 6c, with a horizontally inwardly projecting lip 7 at the upper part of the inner circumferential wall 6a. A pair of vertically spaced ridges 8 and 9 are provided circumferentially at the inner circumferential wall of the lip 7. As shown in Figs. 1 and 2, the internal diameter of the upper circumferential ridge 8 is smaller than that of the lower circumferential ridge 9, so that the upper circumferential ridge 8 constitutes the narrowest portion of the inner circumferential wall of the lip 7. Although the upper circumferential ridge 8 forms a relatively sharp edge, the lower circumferential ridge 9 is formed by a relatively smoothly curved surface. An upper part 7a of the inner circumferential wall of the lip 7, which extends from the flat top 2a of the piston 2 to the upper circumferential ridge 8, is shaped like a funnel in which the cross sectional area gradually decreases downwardly.

An intermediate part 7b of the inner circumferential wall of the lip 7, which extends from the upper circumferential ridge 8 to the lower circumferential ridge 9, is formed as a concave surface in which the cross sectional area gradually increases downwardly. This intermediate part 7b of the inner circumferential wall of the lip 7 is formed by an arc of a circle in the longitudinal cross section, as shown in Figs. 1 and 2, and is generally directed to, or faces, the center of the bottom of the cavity 6. A lower part 7c of the inner circumferential wall of the lip 7, which extends downwardly from the lower circumferential ridge 9, is gradually enlarged downwardly and constitutes a part of a lower part 6b of the inner circumferential wall 6a of the cavity 6. The lower part 6b of the inner circumferential wall 6a of the cavity 6 is formed as a concave surface and bulges outward relative to the lower circumferential ridge 9. The bottom wall 6c of the cavity 6 rises conically at the central region thereof.

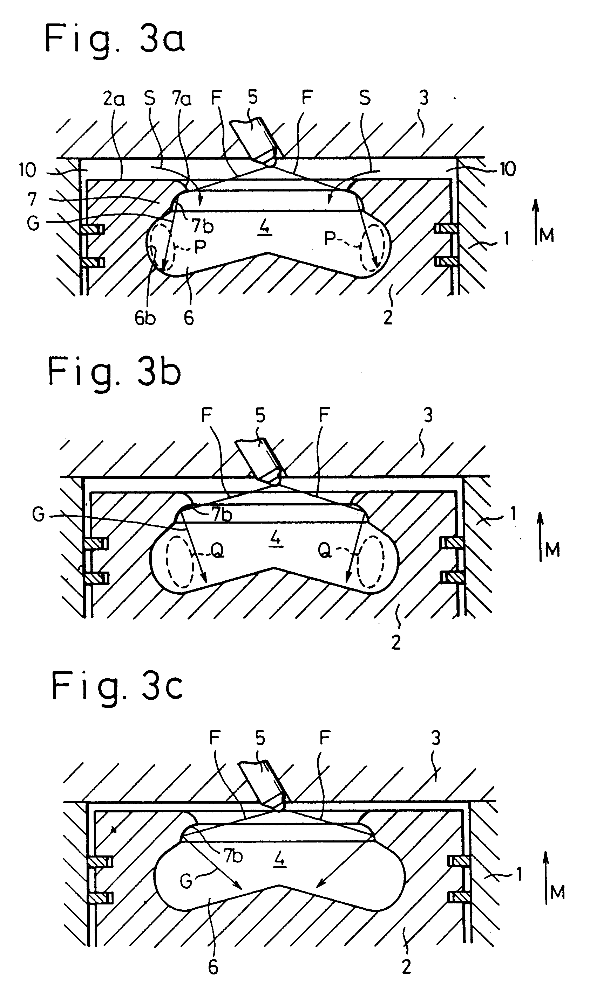

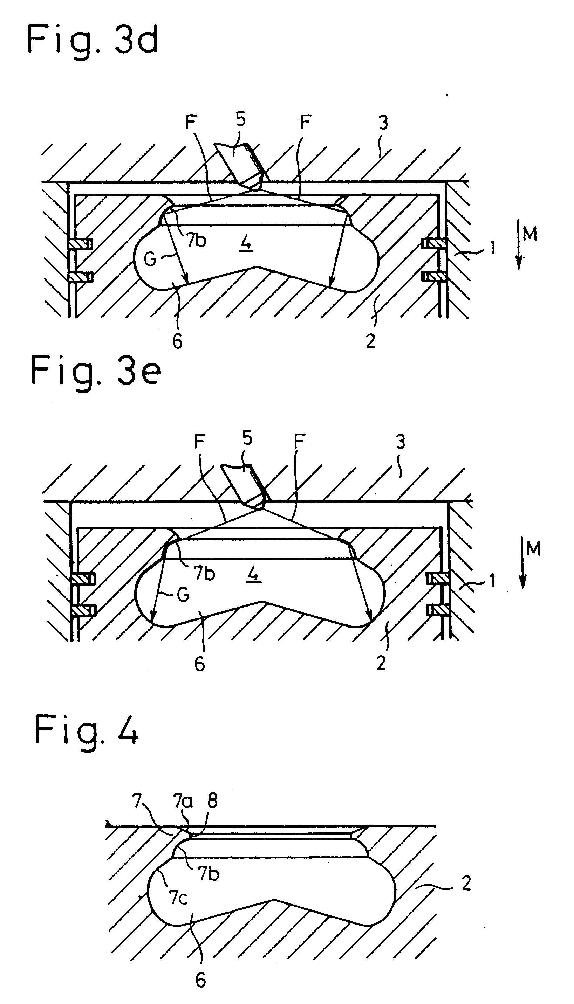

The fuel injection nozzle 5 has an injection hole or a plurality of injection holes, from which the fuel is injected to the intermediate part 7b of the inner circumferential wall of the lip 7. A part of the injected fuel is reflected at the intermediate part 7b of the inner circumferential wall, and therefore, this intermediate part 7b of the inner circumferential wall is referred to hereinafter as a concave fuel reflecting surface. In the present invention, the function of the concave fuel reflecting surface 7b is very important, and is described in detail with reference to Fig. 3.

Figures 3a to 3e illustrate the combustion steps at a predetermined fuel injection time from the start of the fuel injection to the end thereof. Figure 3a shows the situation when the piston 2 is moving upward (as indicated by the arrow M) at a position slightly before the top dead center and the fuel injection starts; Fig. 3b shows the subsequent situation when the piston 2 is moving upward slightly more toward the top dead center; Fig. 3c shows the situation when the piston 2 reaches top dead center; Fig. 3d shows the situation when the piston 2 is moving downward and is slightly past top dead center; and, Fig. 3e shows the situation when the piston 2 has moved further downward and the fuel injection is completed. The injected fuel F, as shown in Fig. 3a, first collides against the upper region of the concave fuel reflecting surface 7b upon the start of the fuel injection, and then against the lower region of the concave fuel reflecting surface 7b when the piston 2 reaches top dead center, as shown in Fig. 3c. In other words, the disposition of the concave fuel reflecting surface 7b and the direction of the fuel injection from the fuel injection nozzle 5 are such that the injected fuel F first collides against the upper region of the concave fuel reflecting surface 7b upon the start of the fuel injection, and then against the lower region of the concave fuel reflecting surface 7b when the piston 2 reaches top dead center.

In addition, the concave fuel reflecting surface 7b is downwardly and obliquely directed toward the center of the bottom of the cavity 6, and is defined by an arc of a circle in a longitudinal cross section. Therefore, the angle between the concave fuel reflecting surface 7b and the injected fuel F at the fuel colliding point becomes greater as the piston 2 moves upward, as shown in Figs. 3a to 3c, and thus the angle between the central axis of the injected fuel F and the central axis of the reflected fuel G, reflected at the concave fuel reflecting surface 7b becomes gradually smaller as the piston 2 moves upward. The reflected fuel G penetrates toward the peripheral region of the cavity 6 upon the start of the fuel injection, as shown in Fig. 3a, and then the course of the reflected fuel G is shifted from the peripheral region of the cavity 6 toward the central region of the cavity 6, as shown in Fig. 3b. The reflected fuel G moves toward the central region of the cavity 6 when the piston 2 reaches top dead center, as shown in Fig. 3c. That is, the course of the reflected fuel G is continuously shifted from the peripheral region of the cavity 6 toward the central region of the cavity 6 from the start of the fuel injection, until the piston 2 reaches top dead center. In other words, the shape of the concave fuel reflecting surface 7b is such that the course of the reflected fuel G is continuously shifted from the peripheral region of the cavity 6 toward the central region of the cavity 6 from the start of the fuel injection, until the piston 2 reaches top dead center. After the piston 2 reaches top dead center, the reflected fuel G is continuously shifted from the central region of the cavity 6 toward the peripheral region of the cavity 6 until the fuel injection is completed, as shown in Figs. 3c to 3e.

The injected fuel F first collides against the upper region of the concave fuel reflecting surface 7b when the fuel injection starts, as shown in Fig. 3a. The injected and reflected fuel includes a various sized fuel mist particles. Big fuel mist particles tend to be deposited on the concave fuel reflecting surface 7b and medium fuel mist particles are reflected at the concave fuel reflecting surface 7b toward the inner peripheral region of the cavity 6, as shown by the arrow G. Smaller fuel mist particles are carried by centrifugal force by the swirl toward the peripheral region of the cavity 6. Also, there is a squish flow S, as shown in Fig. 3a, which is generated in the squish area 10 between the peripheral region of the flat top 2a of the piston 2 and the associated inner wall of the cylinder head 3 while the piston 2 approaches top dead center, and flows from the squish area 10 centrally into the cavity 6. This squish flow S flows down along the upper part 7a of the inner circumferential wall of the lip 7. As described above, the upper circumferential ridge 8 is formed by a relatively sharp edge (Fig. 2), so that the squish flow S flowing down along the upper part 7a of the inner circumferential wall of the lip 7 is separated from the wall at the upper circumferential ridge 8 and generates minute vortices, or a microturbulence near the concave fuel reflecting surface 7b, which serves to vaporize the liquid fuel deposited on the concave fuel reflecting surface 7b. Also, a part of the liquid fuel deposited on the concave fuel reflecting surface 7b is carried to the lower part 6b of the inner circumferential wall of the cavity 6 beyond the smoothly curved lower circumferential ridge 9 (Fig. 2). In this way, the fuel including the big, medium and small fuel mist particles collects at the inner peripheral region of the cavity 6 immediately after the start of the fuel injection and the mixture region P is formed at the inner peripheral region of the cavity 6.

Then the course of the reflected fuel G is shifted toward the central region of the cavity 6 as the piston 2 moves upward, as shown in Fig. 3b. At that time, the temperature of the fuel mist particles at the inner peripheral region of the cavity 6 will increase sufficiently to self-ignite the mixture formation P (Fig. 3a). In the meantime, considering a case in which light weight gas and heavy weight gas coexist in the swirl, or in the rotating flow, there is a tendency, under a centrifugal force, for the heavy weight gas to be forced out to the peripheral region and for the lightweight gas to collect at the central region. In fact, the weight of the combusting gas is lighter than that of air, so that when the combusting gas and air is rotating in the cavity 6 the combusting gas moves toward the central region and air moves to the peripheral region. Therefore, once the mixture P (Fig. 3a) at the peripheral region of the cavity 6 is caused to ignite, then the combustion front moves toward the central region of the cavity 6, as represented by the character Q in Fig. 3b. This ensures the provision of an igniting flame, igniting core or burning front which propagates from the generated peripheral region toward the central region of the cavity 6, following the distributed fuel, which is shifting from the peripheral region toward the central region of the cavity 6. In other words, the igniting flame timely catches the mixture which is continuously formed by the reflected fuel. Therefore, when the reflected fuel G is moving to the central region of the cavity 6, as shown in Fig. 3c, the mixture formed by this reflected fuel G is immediately and continuously ignited by the immediately following igniting flame.

In this period, air will be forced toward the peripheral region of the cavity 6. Therefore, when the piston 2 movement turns downward, as shown in Figs. 3d and 3e, the course of the reflected fuel G is shifted from the central region of the cavity 6 toward the peripheral region of the cavity 6, and thus the reflected fuel G is delivered to the peripheral region having enough air. The burning flame, at this time, is moved from the central region toward the peripheral region of the cavity 6, and the fuel deposited on the surface of the inner wall of the cavity 6 is vaporized and forms a mixture at the peripheral region of the cavity 6, which will be caused to burn by the flame moving from the central region toward the peripheral region of the cavity 6.

In this embodiment, the upper part 7a of the inner circumferential wall of the lip 7 is not used as a fuel reflecting surface, and as shown in Fig. 4, it is possible to form the upper part 7a of the inner circumferential wall of the lip 7 as a flat conical surface and the upper circumferential ridge 8 as a cylindrical surface.

As explained, it is possible to increase an excess air factor by shifting the course of the reflected fuel from the peripheral region of the cavity toward the central region of the cavity. Also, the burning flame timely propagates the injected fuel, the course of which is shifted from the peripheral region of the cavity toward the central region of the cavity, and thus it is possible to ensure a controlled combustion in which an abrupt pressure increase does not occur.

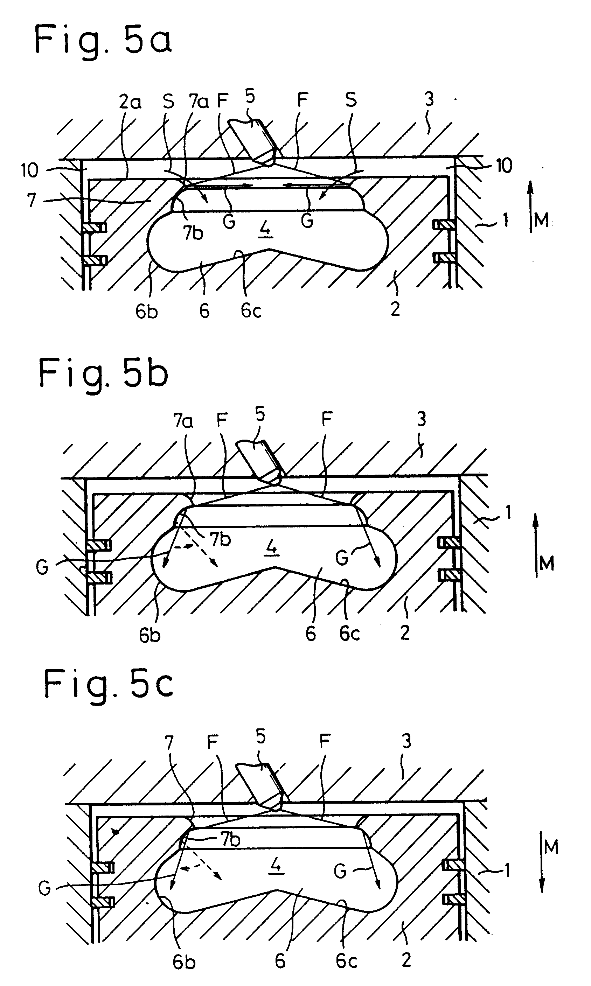

Figures 5a to 5c show a second embodiment of the present invention. Like reference numerals in this embodiment as well as in the subsequent embodiments described hereinafter are used to represent similar parts in Figs. 1 to 3. As in Figs. 1 to 3, the cavity 6 in Figs. 5a to 5c includes the upper part 7a of the inner circumferential wall of the lip 7, the intermediate part 7b of the inner circumferential wall of the lip 7, and the lower part 7c of the inner circumferential wall of the lip 7, with the upper and lower circumferential ridges 8 and 9. The intermediate part 7b of the inner circumferential wall of the lip 7 is also formed as a concave surface by an arc of a circle and serves as the concave fuel reflecting surface. The upper part 7a of the inner circumferential wall of the lip 7 is intended to serve as a further upper fuel reflecting surface, and is curved so that the fuel is reflected toward the central region of the cavity 6.

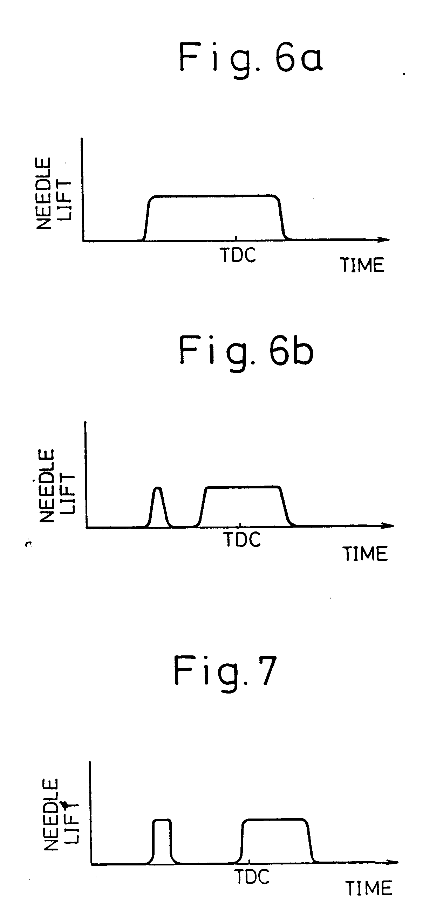

Figure 6a shows the needle lift of the fuel injection nozzle 5, and thus the fuel injection time. The fuel injection starts at a time earlier than that of the first embodiment shown in Figs. 1 to 3, so that the injected fuel first collides with the additional upper fuel reflecting surface 7a and is reflected toward central region of the cavity 6 in a direction generally perpendicular to the longitudinal axis of the piston 2, as shown in Fig. 5a. Therefore, the mixture region is formed at the upper area in the cavity 6. Then the fuel injection is continued and the injected fuel collides with the concave fuel reflecting surface 7b to shift the course of the reflected fuel, as shown in Fig. 5b and as fully described previously, and to reversely shift the course of the reflected fuel, as shown in Fig. 5c. The ignition first occurs at the upper part of the cavity 6, and then, after a short time, at the peripheral region (refer to Q in Fig. 3b), so that igniting flame encloses the reflected and shifting fuel from two perpendicular directions to ensure a continuous and rapid combustion.

The fuel injection can be carried out in a manner shown in Fig. 6b, in which the fuel injection nozzle 5 effects a pilot injection and a main injection, with an interruption therebetween. This also applies to the second embodiment, in which the pilot injection is directed to the additional upper fuel reflecting surface 7a and the main injection to the concave fuel reflecting surface 7b.

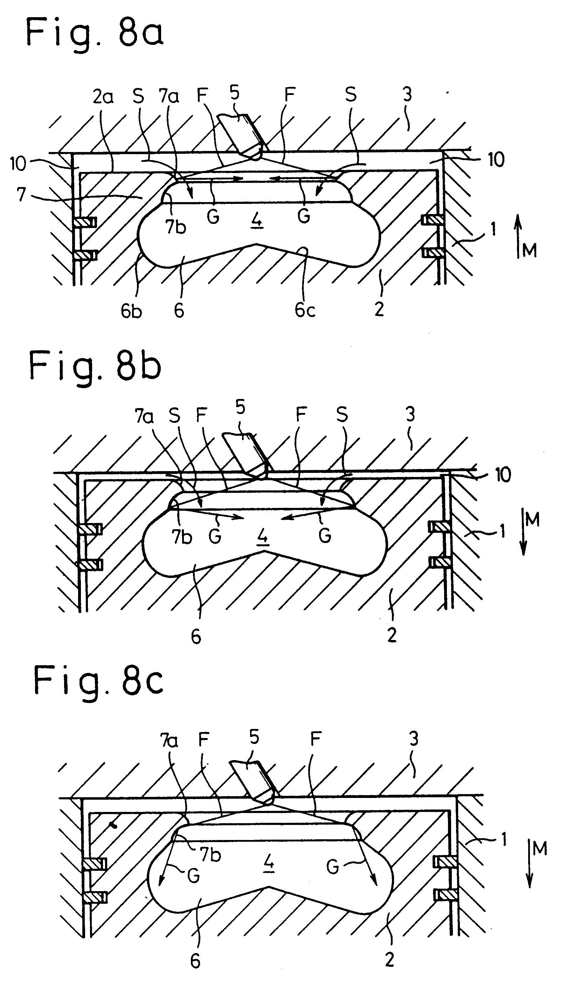

Figure 7 also shows a pilot injection and a main injection, which is preferably applied to the third embodiment shown in Figs. 8a to 8c. The pilot injection is directed to the additional upper fuel reflecting surface 7a, as shown in Fig. 8a, but the start of the main injection in this case is deferred until the piston 2 approaches top dead center, so that the injected fuel is reflected at the lower region of the concave fuel reflecting surface 7b just above the lower circumferential ridge 9, as shown in Fig. 8b. The fuel injection continues during the subsequent downward movement of the piston 2, as shown in Fig. 8c.

In this case, the injected fuel first collides with the additional upper fuel reflecting surface 7a and is reflected toward the central region of the cavity 6, and ignition first occurs at the upper part of the cavity 6. Then, after a short interruption, the injected fuel is reflected at the lower region of the concave fuel reflecting surface 7b to form the mixture region at the downward central region of the cavity 6; this mixture region being shifted during the downward movement of the piston 2. Therefore, the igniting flame generated at the upper central portion in the cavity 6 by the pilot injection, propagates toward the lower central portion in the cavity 6, and then from the central portion toward the peripheral portion in the cavity 6.

In this way, the combustion begins at the central portion in the cavity 6 and propagates from the central portion toward the peripheral portion in the cavity 6. This is advantageous when the inner circumferential wall 6a of the cavity 6 is still cold during the warming up of the engine, since the initial combustion flame does not touch the cold inner circumferential wall 6a and can smoothly grow. A part of the fuel may be deposited on the inner circumferential wall 6a, which can be heated by the central combustion and vaporized and burnt thereafter. Therefore, the mixture is fully combusted and the unburnt hydrocarbon component is reduced to prevent white smoke and a toxic smell.

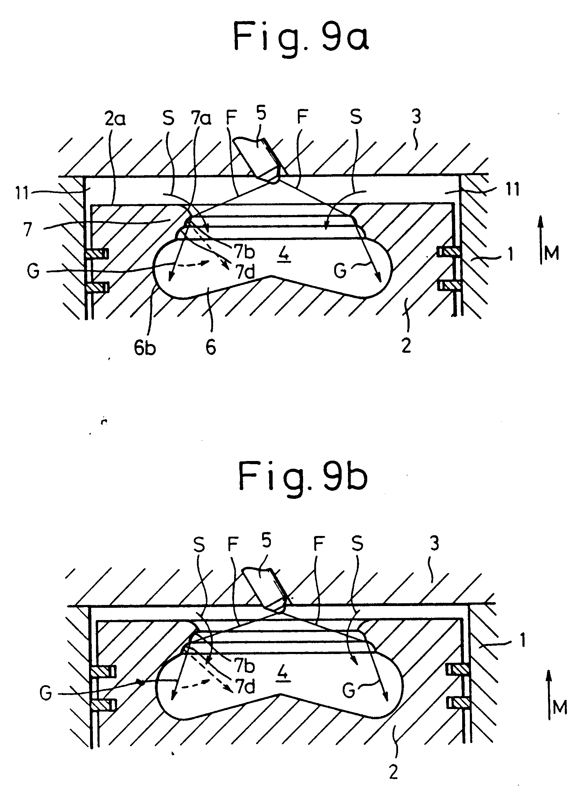

Figures 9a and 9b show a fourth embodiment of the present invention. In this embodiment, another lower reflecting surface 7d is formed below the lower circumferential ridge 9, which delimits the concave fuel reflecting surface 7b. The lower reflecting surface 7d is formed in a concave shape in series with the concave fuel reflecting surface 7b, so that the injected fuel is twice shifted during the upward movement of the piston 2; the fuel is reflected at the concave fuel reflecting surface 7b and shifted from the peripheral region of the cavity 6, as shown in Fig. 9a, then, upon a further upward movement of the piston 2, the fuel is reflected at the lower concave fuel reflecting surface 7d and shifted again from the peripheral region of the cavity 6, as shown in Fig. 9a. The fuel injection can be further continued during the downward movement of the piston 2, with the fuel shifting from the central region of the cavity 6 toward the peripheral region of the cavity 6, twice. With this arrangement, it is possible to further increase an excess air factor by twice shifting the course of the reflected fuel from the peripheral region of the cavity 6 toward the central region of the cavity 6. As will be clear, an even lower concave fuel reflecting surface can be provided.

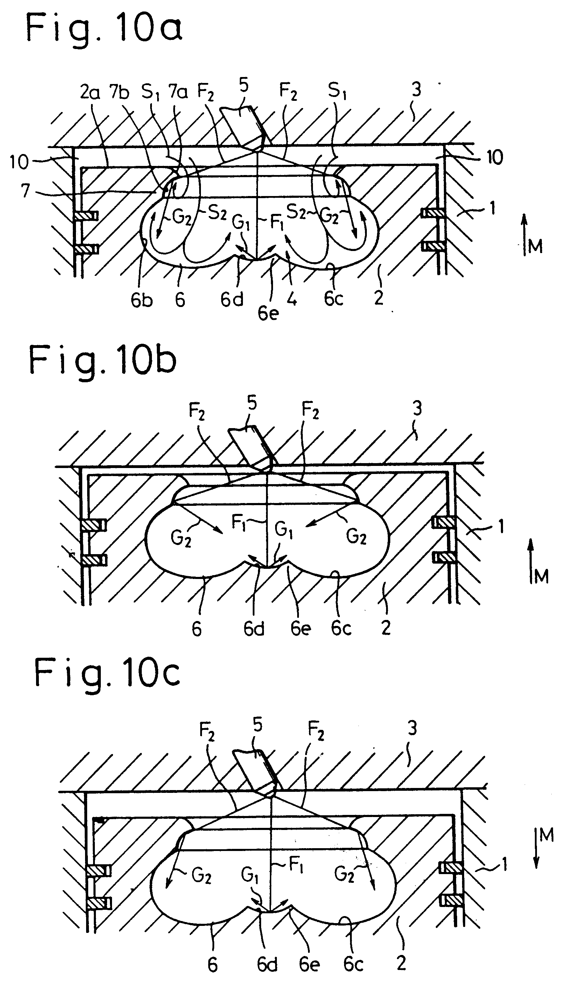

Figures 10a to 10c show a fifth embodiment of the present invention. In this embodiment, the bottom wall 6c of the cavity 6 has a central rising portion 6d forming a crater-shaped recess which is encircled by a somma-like circumferential edge 6e and defined by an arc of a circle in cross section. The fuel injection nozzle 5 has a plurality of nozzle openings and can inject the fuel toward the crater-shaped recess of the rising bottom wall 6d of the cavity 6 through one of the nozzle openings, as shown by the character $F_1$ , and toward the concave fuel reflecting surface 7b in the inner circumferential wall of the cavity 6 through the remainder of the nozzle openings, as shown by the character $F_2$. The respective fuel is reflected at the crater-shaped recess of the rising bottom wall 6d, as shown by the character $G_1$ , and at the concave fuel reflecting surface 7b, as shown by the character $G_2$ , the feature of which has been described. The injected fuel $F_1$ tends to be deposited on the crater-shaped recess of the rising bottom wall 6d, but is successively hit by the continuously injected fuel and splashed out of the somma-like circumferential edge 6e into the cavity 6, is floatingly separated from the bottom wall, and forms a mixture at the upper central region of the cavity 6. A part of the squish flow $S_1$ , which flows near the upper circumferential ridge 8, forms vortices or microturbulence and another squish flow $S_2$ flowing remote from the upper circumferential ridge 8 is directed toward the bottom wall 6c of the cavity 6 and is separated into an outside flow portion along the inner circumferential wall 6b of the cavity 6 and an inside flow portion along the rising bottom wall 6d of the cavity 6. The latter aids the vaporization of the reflected fuel $G_1$ and the formation of the mixture for effecting combustion.

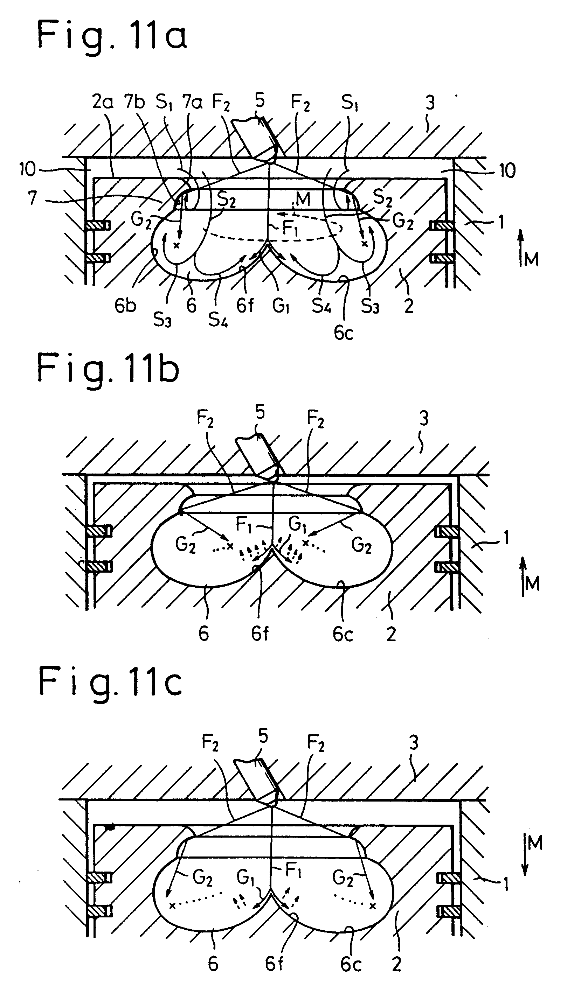

Figures 11a to 11c show a sixth embodiment of the present invention. In this embodiment, the bottom wall 6c of the cavity 6 has a central rising portion 6f which is formed as a curved conical shape, and thus has a peak. Similar to the previous embodiment, a part of the fuel is injected toward this peak and flows along the surface of the central rising portion 6f to be deposited therealong. The combustion is started at the peripheral region of the cavity 6 and propagates toward the central region of the cavity 6, as shown by the character x in Figs. 11a nd 11c. The deposited fuel on the central rising portion 6f is vaporized by the heat in the initial combustion in the peripheral region and burnt when the igniting flame is shifted toward the central region of the cavity 6. The combustion will continue upon the downward movement of the piston 2, as shown in Fig. 11c. Also, as shown, the squish flow $S_2$ is separated into an outside flow portion $S_3$ along the inner circumferential wall 6b of the cavity 6 and an inside flow portion $S_4$ along the rising bottom wall 6f of the cavity 6, and will cause a strong turbulence in the entire cavity 6, so that it is possible to effect a good combustion even when deleting a swirl (such as shown in dotted arrow M).

## Claims

1. A combustion chamber arrangement in a direct injection type diesel engine comprising a cylinder block (1), a piston (2) reciprocally inserted in said cylinder block (1) and having a cavity (6) at a top thereof to form a combustion chamber (4), a fuel injection means (5) for injecting fuel towards said cavity (6), and an inner circumferential wall (6a) of the cavity (6) which includes a lower part (7c) and an intermediate part (7b) with a lower circumferential ridge (9) extending therebetween, said upper part (7b) being formed as a concave shape in a longitudinal cross section and constituting a concave fuel reflecting surface (7b), **characterized in that** the concave shape of said intermediate part (7b) is tipped inwardly such that the cross sectional area of said cavity (6) gradually decreases directly upwards from the tip of said lower circumferential ridge (9).

2.  A combustion chamber arrangement according to claim 1, **characterized in that** the cross-sectional area of the cavity (6) increases downwards from the tip of said lower circumferential ridge (9) due to the shape of said lower part (7c).

3.  A combustion chamber arrangement according to claim 1 or 2, **characterized in that** the concave fuel reflecting surface (7b) is delimited upwards by an upper circumferential ridge (8).

4.  A combustion chamber arrangement according to claim 1, 2, or 3, **characterized in that** the fuel injection continues during the downward movement of said piston (2).

5.  A combustion chamber arrangement according to claim 1, 2, 3, or 4, **characterized in that** said concave fuel reflecting surface (7b) is formed by an arc of a circle in a longitudinal cross section.

6.  A combustion chamber arrangement according to claim 3, 4, or 5, **characterized in that** another upper fuel reflecting surface (7a) is formed in a convex shape above the upper circumferential ridge (8).

7.  A combustion chamber arrangement according to claim 1, 2, 3, 4, 5, or 6, **characterized in that** the concave fuel reflecting surface (7b) is followed by at least one further lower fuel reflecting surface (7d) with at least one further circumferential ridge therebetween being in series with said concave fuel reflecting surface (7b).

8.  A combustion chamber arrangement according to claim 6 or 7, characterized in that said fuel injection means (5) is capable of a pilot injection and a main injection with an interruption therebetween, and the fuel by the pilot injection is directed to said further upper fuel reflecting surface (7a).

9.  A combustion chamber arrangement according to claim 8, characterized in that said main injection starts when said piston (2) is moving upward at a position where the injected fuel is reflected at an upper region of said concave fuel reflecting surface (7b) just below said upper circumferential ridge (8).

10. A combustion chamber arrangement according to claim 8, characterized in that said main injection starts when said piston (2) is moving upward at a position where the injected fuel is reflected at said lower region of said concave fuel reflecting surface (7b) just above said lower circumferential ridge (9), said main injection continuing during a subsequent downward movement of said piston (2).

11. A combustion chamber arrangement according to claim 1, 2 or 3, characterized in that said cavity (6) comprises a bottom wall with a central rising portion (6d, 6f).

12. A combustion chamber arrangement according to claim 11, characterized in that said central rising portion (6d) has a crater-shaped recess, the fuel being injected toward said crater-shaped recess.

13. A combustion chamber arrangement according to claim 12, characterized in that said central rising portion (6f) has a peak, the fuel being injected toward said peak.

**Patentansprüche**

1.  Brennkammer in einem Direkteinspritzungs-Dieselmotor mit einem Zylinderblock (1), einem zur Hin- und Herbewegung in den Zylinderblock (1) eingesetzten Kolben (2) mit einer Höhlung (6) an dessen Oberseite, die eine Brennkammer (4) bildet, einer Brennstoffeinspritzvorrichtung (5) zum Einspritzen von Brennstoff zur Höhlung (6) und deren Innenumfangswand (6a) hin, die einen unteren Teil (7c) und einen Zwischenteil (7b) mit einer sich dazwischen erstreckenden unteren Umfangsrippe (9) aufweist, wobei der Zwischenteil (7b) in konkaver Form im Längsschnitt ausgebildet ist und eine konkave Brennstoffprallfläche (7b) bildet, dadurch gekennzeichnet, daß die konkave Form des Zwischenteils (7b) nach innen zugespitzt ausgebildet ist, so daß die Querschnittsfläche der Höhlung direkt nach oben von der Spitze der unteren Umfangsrippe (9) weg allmählich abnimmt.

2.  Brennkammer nach Anspruch 1, dadurch gekennzeichnet, daß die Querschnittsfläche der Höhlung (6) aufgrund der Form des unteren Teils (7c) von der Spitze der unteren Umfangsrippe (9) weg nach unten zunimmt.

3.  Brennkammer nach Anspruch 1 oder 2, dadurch gekennzeichnet, daß die konkave Brennstoffprallfläche (7b) nach oben von einer oberen Umfangsrippe (8) begrenzt ist.

4. Brennkammer nach Anspruch 1, 2 oder 3, dadurch gekennzeichnet, daß die Brennstoffeinspritzung während der Abwärtsbewegung des Kolbens (2) fortgesetzt wird.

5. Brennkammer nach Anspruch 1, 2, 3 oder 4, dadurch gekennzeichnet, daß die konkave Brennstoffprallfläche (7b) im Längsschnitt durch einen Kreisbogen gebildet ist.

6. Brennkammer nach Anspruch 3, 4 oder 5, dadurch gekennzeichnet, daß oberhalb der oberen Umfangsrippe (8) eine weitere obere Brennstoffprallfläche (7a) in konvexer Form gebildet ist.

7. Brennkammer nach Anspruch 1, 2, 3, 4, 5 oder 6, dadurch gekennzeichnet, daß auf die konkave Brennstoffprallfläche (7b) wenigstens eine weitere untere Brennstoffprallfläche (7d) folgt, wobei dazwischen wenigstens eine weitere Umfangsrippe anschließend an die konkave Brennstoffprallfläche (7b) angeordnet ist.

8. Brennkammer nach Anspruch 6 oder 7, dadurch gekennzeichnet, daß die Brennstoffeinspritzvorrichtung (5) für eine Voreinspritzung und eine Haupteinspritzung mit einer Unterbrechung dazwischen ausgebildet ist und der Brennstoff bei der Voreinspritzung auf die weitere obere Brennstoffprallfläche (7a) gerichtet wird.

9. Brennkammer nach Anspruch 8, dadurch gekennzeichnet, daß die Haupteinspritzung einsetzt, wenn sich der Kolben (2) in einer Lage nach oben bewegt, bei der der eingespritzte Brennstoff an einem oberen Bereich der konkaven Brennstoffprallfläche (7b) unmittelbar unterhalb der oberen Umfangsrippe (8) zurückprallt.

10. Brennkammer nach Anspruch 8, dadurch gekennzeichnet, daß die Haupteinspritzung einsetzt, wenn sich der Kolben (2) in einer Lage nach oben bewegt, bei der der eingespritzte Brennstoff am unteren Bereich der konkaven Brennstoffprallfläche (7b) unmittelbar oberhalb der unteren Umfangsrippe (9) zurückprallt, wobei die Haupteinspritzung während einer folgenden Abwärtsbewegung des Kolbens (2) fortdauert.

11. Brennkammer nach Anspruch 1, 2 oder 3,

dadurch gekennzeichnet, daß die Höhlung (6) eine Bodenwand mit einem mittigen erhabenen Teil (6d, 6f) aufweist.

12. Brennkammer nach Anspruch 11, dadurch gekennzeichnet, daß der mittige erhabene Teil (6d) eine kraterartige Vertiefung hat, zu der hin der Brennstoff eingespritzt wird.

13. Brennkammer nach Anspruch 11, dadurch gekennzeichnet, daß der mittige erhabene Teil (6f) eine Spitze aufweist, zu der hin der Brennstoff eingespritzt wird.

**Revendications**

1. Un agencement de chambre de combustion pour moteur diesel du type à injection, comportant un bloc-cylindres (1), un piston (2) monté pour se déplacer alternativement dans ledit bloc-cylindres (1) et présentant une cavité (6) au niveau de sa partie supérieure afin de réaliser une chambre de combustion (4), des moyens d'injection de combustible (5) dans ladite cavité (6), et une paroi périphérique interne (6a) de la cavité (6), qui comporte une partie inférieure (7c) et une partie intermédiaire (7b) avec une arête périphérique inférieure (9) s'étendant entre elles, ladite partie supérieure (7b) étant réalisée sous forme concave en coupe longitudinale et constituant une surface concave (7b) faisant rebondir le combustible, caractérisé en ce que la forme concave de ladite partie intermédiaire (7b) est bombée vers l'intérieur de sorte que l'aire en coupe transversale de ladite cavité (6) diminue progressivement directement vers le haut à partir de la pointe de ladite arête périphérique inférieure (9).

2. Un agencement de chambre de combustion selon la revendication 1, caractérisé en ce que l'aire en coupe transversale de la cavité (6) s'accroît vers le bas à partir de l'arête de ladite arête périphérique inférieure (9) du fait de la forme de ladite partie inférieure (7c).

3. Un agencement de chambre de combustion selon la revendication 1 ou 2, caractérisé en ce que la surface concave (7b) faisant rebondir le combustible est délimitée vers le haut par une arête périphérique supérieure (8).

4. Un agencement de chambre de combustion selon la revendication 1, 2 ou 3, caractérisé en ce que l'injection de combustible se poursuit pendant le déplacement vers le bas dudit piston (2).

5. Un agencement de chambre de combustion selon la revendication 1, 2, 3 ou 4, caractérisé en ce que ladite surface concave (7b) faisant rebondir le combustible, présente en coupe longitudinale la forme d'un arc de cercle.

6. Un agencement de chambre de combustion selon la revendication 3, 4 ou 5, caractérisé en ce que une autre surface supérieure (7a) faisant rebondir le combustible est réalisée selon une forme convexe au-dessus de l'arête périphérique supérieure (8).

7. Un agencement de chambre de combustion selon la revendication 1, 2, 3, 4, 5 ou 6 caractérisé en ce que la surface concave (70) faisant rebondir le combustible est suivie par au moins une autre surface inférieure (7d) faisant rebondir le combustible, au moins une autre arête périphérique étant intercalée entre elles en série avec ladite surface concave (7b).

8. Un agencement de chambre de combustion selon la revendication 6 ou 7, caractérisé en ce que lesdits moyens d'injection de combustible (5) sont aptes à mettre en oeuvre une injection pilote et une injection principale avec un temps d'interruption entre elles, et en ce que le combustible provenant de l'injection pilote est dirigé vers ladite autre surface supérieure (7a) faisant rebondir le combustible.

9. Un agencement de chambre de combustion selon la revendication 8, caractérisé en ce que ladite injection principale débute lorsque ledit piston (2) se déplace vers le haut en une position pour laquelle le combustible injecté rebondit au niveau d'une zone supérieure de ladite surface concave (7b) faisant rebondir le combustible, juste en-dessous de ladite arête périphérique supérieure (8).

10. Un agencement de chambre de combustion selon la revendication 8, caractérisé en ce que ladite injection principale débute lorsque ledit piston (2) se déplace vers le haut en une position pour laquelle le combustible injecté rebondit au niveau de ladite zone inférieure de ladite surface concave (7b) faisant rebondir le combustible, juste au-dessus de ladite arête périphérique inférieure (9), ladite injection principale se poursuivant pendant le déplacement subséquent, vers le bas, dudit piston (2).

11. Un agencement de chambre de combustion selon la revendication 1, 2 ou 3, caractérisé en ce que ladite cavité (6) comprend une paroi inférieure présentant une partie centrale ascendante (6d, 6f).

12. Un agencement de chambre de combustion selon la revendication 11, caractérisé en ce que ladite partie centrale ascendante (6d) présente une cavité en forme de cratère, le combustible étant injecté vers cette cavité en forme de cratère.

13. Un agencement de chambre de combustion selon la revendication 12, caractérisé en ce que ladite partie centrale ascendante (6f) présente un sommet pointu, le combustible étant injecté vers ce sommet pointu.

# Fig. 1

# Fig. 2

## Fig. 3a

## Fig. 3b

## Fig. 3c

Fig. 3d

Fig. 3e

Fig. 4

## Fig. 5a

## Fig. 5b

## Fig. 5c

# Fig. 6a

# Fig. 6b

# Fig. 7

# Fig. 8a

# Fig. 8b

# Fig. 8c

# Fig. 9a

# Fig. 9b

# Fig. 10a

# Fig. 10b

# Fig. 10c

# Fig. 11a

# Fig. 11b

# Fig. 11c

18